# EUROPEAN PATENT APPLICATION

(11) **EP 2 878 954 A1**
(43) Date of publication of application: **03.06.2015**
(21) Application number: 13194958.8
(22) Date of filing: 28.11.2013
(51) Int. Cl.: G01N 35/10, B01L 3/02

(54) **Pipetting method and system**

(71) Applicant: F. Hoffmann-La Roche AG, 4070 Basel (CH); Roche Diagnostics GmbH, 68305 Mannheim (DE)
(72) Inventor: Gutmann, Oliver, 8800 Thalwil (CH); Steinert, Chris, 6005 Lurern (CH)
(74) Representative: Curcio, Mario

(57) **Abstract**

A method of pipetting a test liquid (10) is described.

The method comprises controlling a pipetting system (100, 200, 300, 400) comprising an aspiration/dispensing nozzle (30), a pump (40) and a fluid supplier (50), at least part of which are fluidically connectable to each other via a nozzle line (31), a pump line (41) and a fluid supplier line (51) respectively, and via at least one valve (60, 70, 71, 72).

Controlling the pipetting system (100, 200, 300, 400) comprises moving the aspiration/dispensing nozzle (30) to an aspiration position (1') and aspirating a pre-defined volume of test liquid (10) while the nozzle line (31) is fluidically connected to the pump line (41) and fluidically disconnected from the fluid supplier line (51).

It further comprises moving the aspiration/dispensing nozzle (30) to a dispensing position (2') while the nozzle line (31) is fluidically disconnected from the pump line (41).

It further comprises fluidically connecting the nozzle line (31) and the pump line (41) in the sample dispensing position (2') and dispensing at least a part of the aspirated test liquid (10).

It further comprises adjusting the height of the fluid supplier (50) so that the fluid (52) in the fluid supplier (50) is hydrostatically balanced with the test liquid (10) in the aspiration/dispensing nozzle (30) or the fluid level in the fluid supplier (50) is maintained constant at a height, which is in a range of movement of the aspiration/dispensing nozzle (30) in the vertical direction.

A pipetting system (100, 200, 300, 400) for pipetting a test liquid (10) is also described.

## Description

### FIELD OF THE INVENTION

The present invention relates to a method and to a system for pipetting test liquids for carrying out in vitro diagnostics tests.

### BACKGROUND

Different types of pipetting methods and pipetting systems have been implemented in various laboratory instruments for in vitro diagnostics. Some pipetting systems comprise an aspiration/dispensing nozzle, typically in the form of a reusable steel needle, which is mounted on a rotatable arm. By rotating the arm the, the nozzle may be moved between an aspiration position and a dispensing position, which are typically fixed in space. In addition to a rotational movement, the nozzle may be further moved in a vertical direction, i.e. lowered or raised in order to get in contact or out of contact with a liquid in a liquid container, e.g. a sample container, a reagent container or a reaction vessel. These kind of pipetting systems are relatively simple but have a limited freedom of movement as they can perform pipetting operations, i.e. aspiration and/or dispensing, only in a limited and fixed number of positions. Also, their simplicity is counterbalanced by the need of more complex systems for bringing different liquid containers always to the same pipetting positions.

Other kinds of pipetting systems can offer a higher degree of movement. These typically comprise a pipetting head which comprises at least one aspiration/dispensing nozzle and possibly other functional units mounted on a head translation mechanism. The aspiration/dispensing nozzle can thus virtually access any position on a given working area. The pipetting systems typically comprise also at least one pump and a fluid supplier, used e.g. to supply system fluid and/or for washing the nozzle. In order to avoid that the pipetting head becomes bulky and heavy, the pump and/or the fluid supplier, are located away from the pipetting head and are fluidically connected to the pipetting head via fluidic lines. Due to the fact that the pipetting head can be moved over a greater distance and the distance can be variable, including a variable vertical distance, long, e.g. up to a few meters, and flexible fluidic lines are required. Due to the fact that the fluidic lines also move as the pipetting head moves, they can be subjected to deformation, e.g. squeezing. Deformation can result in hydraulic forces causing displacement of the test liquid within the nozzle that has been aspirated thereby affecting pipetting precision, especially when dispensing. In addition, movement of the nozzle in the vertical direction can result in variation of the hydrostatic pressure and therefore contribute to liquid displacement. This problem can be differently severe for different pipetting modes. For example, it can be particularly severe for a so called "dummy or overdraw pipetting mode", in which a volume of sample larger than that required for a diagnostic test is first aspirated and then only a fraction of the aspirated volume is dispensed for the test. This method prevents dilution of the reaction mixture with system fluid compared to other methods, where e.g. all the aspirated volume is dispensed but is also more affected than others by liquid displacement, which can possibly result in only part of the intended test liquid being dispensed or no test liquid at all being dispensed or an excess of test liquid being dispensed. Pipetting precision can be particularly hard to achieve when the liquid volume to be pipetted is small, e.g. below 5-10 microliters.

A pipetting method and a pipetting system are here introduced, which provide a more reproducible and more precise pipetting of test liquids, while at the same time maintaining flexibility and freedom of movement.

This is achieved by a programmed control of the fluidic connections or flow in the fluidic lines according to the independent claims. Some other favorite embodiments are referred to in the dependent claims.

### GENERAL DESCRIPTION

The present disclosure refers to a method and to a system for pipetting a test liquid.

The term "pipetting" is herein used to indicate aspirating, i.e. withdrawing, a volume of test liquid in a first step and dispensing a volume of test liquid in a second step, wherein the volume of dispensed liquid may be different from the volume of aspirated liquid and wherein intermediate aspirating and/or dispensing steps may occur between the first step and the second step.

A "pipetting system" is an automated apparatus for pipetting test liquids and comprising for this purpose at least one aspiration/dispensing nozzle. The nozzle may be embodied as a reusable washable needle, e.g. a steel hollow needle, or as a pipette tip, e.g. a disposable pipette tip, e.g. adapted to be regularly replaced, e.g. before pipetting a different test liquid. The nozzle may be mounted to a pipetting head that can be moved by a head translation mechanism in one or two directions of travel in a plane, e.g., with guiding rails, and a third direction of travel orthogonal to the plane, e.g. with a spindle drive.

The term "test liquid" is herein used to indicate either a sample or a reagent or both, e.g. a mixture or solution of one or more samples and one or more reagents. The term "sample", as used herein, refers to a liquid material suitable for being pipetted and being subjected to an in vitro diagnostic test, e.g. in order to detect one or more analytes of interest suspected to be present therein or to measure a physical parameter of the sample as such, e.g. pH, color, turbidity, viscosity, coagulation time, etc... Examples of in vitro diagnostic tests are clinical chemistry assays, immunoassays, coagulation assays, hematology assays, nucleic acid testing, etc... This method is particularly suitable for clinical chemistry and coagulation in vitro diagnostic tests, for which the concentration of analytes present in the test liquid is typically large enough, e.g. compared to immunochemical tests, that traces of such analytes from another test liquid due to carryover play a negligible role in the final result of the test. On the other hand, due to the high concentration of analytes, it is important that the volume of test liquid being used for the test be as precise as possible. For these tests, which are less susceptible to carryover, reusable aspiration/dispensing nozzles, e.g. steel needles, are typically used.

The sample can be derived from any biological source, such as a physiological fluid, including, blood, saliva, ocular lens fluid, cerebral spinal fluid, sweat, urine, milk, ascites fluid, mucous, synovial fluid, peritoneal fluid, amniotic fluid, tissue, cells or the like. The test sample can be pretreated prior to use, such as preparing plasma from blood, diluting viscous fluids, lysis or the like; methods of treatment can involve filtration, distillation, concentration, inactivation of interfering components, and the addition of reagents. A sample may be used directly as obtained from the source or following a pretreatment to modify the character of the sample, e.g. after being diluted with another solution or after having being mixed with reagents e.g. to carry out one or more in vitro diagnostic tests. The term "sample" as used herein is therefore not only used for the original sample but also relates to a sample which has already been processed (pipetted, diluted, mixed with reagents, enriched, having been purified, having been amplified etc).

The term "reagent" is used to indicate a composition required for treatment of a sample. Reagents may be any liquid, e.g. a solvent or chemical solution, which needs to be mixed with a sample and/or other reagent in order e.g. for a reaction to occur, or to enable detection. A reagent may be for example a diluting liquid, including water, it may comprise an organic solvent, it may comprise a detergent, it may be a buffer. A reagent in the more strict sense of the term may be a liquid solution containing a reactant, typically a compound or agent capable e.g. of binding to or chemically transforming one or more analytes present in a sample. Examples of reactants are enzymes, enzyme substrates, conjugated dyes, protein-binding molecules, nucleic acid binding molecules, antibodies, chelating agents, promoters, inhibitors, epitopes, antigens, etc...

The pipetting system further comprises fluidic lines. A "fluidic line" is a hollow conduit such as a tubing, a channel, a chamber or combinations thereof, comprising one or more parts, suitable for the passage of fluids in a liquid tight manner, and which can have any shape and size, but which is typically optimized to minimize internal volumes and dead volumes. According to an embodiment the least one of the fluidic lines is or comprises a flexible polymeric tubing, which can be bent as the pipetting head moves. The tubing can be e.g. enclosed at least in part in a power track chain, which follows the movement of the translating mechanism. In particular, the pipetting system comprises at least one nozzle line fluidically connected or connectable to the at least one nozzle, at least one pump line fluidically connected or connectable to a pump, and at least one fluid supplier line fluidically connected or connectable to a fluid supplier.

The pipetting system further comprises at least one pump. A "pump" is a pumping device adapted to generate positive or negative pressure for moving fluids through the nozzle and/or through one or more fluidic lines, and in particular for aspirating/dispensing test liquids, by moving a system fluid in a pump line. The pump may be e.g. a syringe pump, a membrane pump, a peristaltic pump, or any other type of pump known in the art and adapted to pump volumes of test liquids in a desired range and with a desired precision.

A "system fluid" is herein used to indicate a liquid associated with the pipetting operation of the pipetting system. The system fluid can be a system liquid or gas. A "system liquid" is an incompressible medium, eventually degassed, which can be used to minimize the amount of compressible medium such as air in the fluidic lines and thereby increase the stiffness of the fluidic system and the precision of pipetting. The system liquid may be an aqueous liquid, e.g. water or other aqueous solution. Alternatively, the system liquid may be a liquid immiscible with the test liquid.

The pipetting system further comprises at least one fluid supplier. A "fluid supplier" is a container containing a fluid to be pumped into the pipetting system through a fluid supplier line. The fluid to be supplied can be a system fluid or a wash fluid.

A "wash fluid" is herein used to indicate a fluid for washing at least part of the pipetting system and in particular at least that part, which has become in contact with a test liquid, i.e. at least part of the nozzle, e.g. before a new test liquid is aspirated. The wash fluid can be a solvent, e.g. a polar solvent, including water, or an aqueous liquid, e.g. water or other aqueous solution, e.g. comprising a detergent and/or active ingredient, e.g. acid, base, enzyme, adapted to remove traces of test liquid.

According to an embodiment the fluid of the fluid supplier is both a system fluid and a wash fluid. According to an embodiment the fluid is water.

The pipetting system further comprises at least one valve connected to any of the nozzle line, the pump line and the fluid supplier line. A "valve" is a joining element between fluidic lines or segments of a fluidic line, configured to regulate fluid flow in the fluidic lines. "Regulating" fluid flow may comprise changing direction of flow, diverting flow from a fluidic line to another fluidic line, enabling or disabling fluidic flow in a fluidic line.

The system further comprises a controller. A "controller" may be embodied e.g. as a programmable logic controller running a computer-readable program provided with instructions to perform operations in accordance with an operation plan associated at least with the pipetting of test liquids. In particular, the operation plan may comprise operations such as controlling the at least one valve to regulate fluid flow in the pipetting system, including aspirating a test liquid, dispensing a test liquid, washing an aspiration/dispensing nozzle, and moving the pipetting head to an aspiration, a dispensing, an end or wash position. The operation plan may however comprise operations other than those associated with pipetting and moving of the aspiration/dispensing nozzle. For example, the operation plan may comprise one or more of the following: moving of test liquid containers, opening and/or closing of test liquid containers, piercing caps of test liquid containers, moving of reaction vessels, mixing of test liquids, e.g. by sip and spitting. In particular, the controller may comprise a scheduler, for executing a sequence of steps within a predefined cycle time. The controller may further determine the order of in vitro diagnostic tests according to the assay type, urgency, etc...

In particular, according to certain embodiments the controller is configured to control the at least one valve such that when the aspiration/dispensing nozzle is in an aspiration position to aspirate a pre-defined volume of test liquid, the nozzle line is fluidically connected to the pump line and fluidically disconnected from the fluid supplier line; when moving the aspiration/dispensing nozzle to a dispensing position the nozzle line is fluidically disconnected from the pump line; before an aspirated volume of test liquid is dispensed in the dispensing position, the nozzle line is fluidically connected to the pump line.

According to an embodiment the controller is configured to control the at least one valve such that when moving the aspiration/dispensing nozzle to a dispensing position the nozzle line is fluidically disconnected from the pump line and the pump line is fluidically connected to the fluid supplier line. In this way, if there is fluid displacement in the pipetting system during movement of the nozzle, this displacement occurs only in the fluid supplier line and/or pump line but not in the nozzle line.

An "aspiration position" is any position in space on or above a test liquid supply area or in a test liquid compartment, in correspondence to which a sample and/or reagent in a test liquid container is located.

A "test liquid container" can be a sample container, e.g. a sample tube, e.g. a primary or secondary tube, a reagent container, e.g. a reagent bottle, vial or cassette, a reaction vessel.

A "dispensing position" is any position in which a test liquid receiving container, typically a reaction vessel, can be located for receiving a volume of aspirated test liquid.

According to certain embodiments, the controller is further configured to control the at least one valve such that before a volume of fluid is aspirated from the fluid supplier line into the pump line, the nozzle line is fluidically disconnected from the pump line and the pump line is fluidically connected to the fluid supplier line; and before a volume of fluid is dispensed through the nozzle in an end position, the fluid supplier line is fluidically disconnected from the pump line and the nozzle line is fluidically connected to the pump line.

An "end position" can be any position in the moving range of the aspiration/dispensing nozzle adapted to receive a dispensed fluid. According to an embodiment the end position is a wash position where a wash and/or waste station is located to wash the aspiration/dispensing nozzle from the inside by dispensing a volume of wash fluid pumped through the nozzle, e.g. from the fluid supplier and/or to wash the aspiration/dispensing nozzle from the outside by rinsing it with wash fluid from the outside.

According to certain embodiments, the at least one valve is mounted on the pipetting head in order to minimize the length of the nozzle line and/or to avoid having a deformable nozzle line during movement of the pipetting head.

The term "mounted on" is herein broadly used to intend attached to, coupled to, or the like without referring to a particular position.

According to an embodiment, the at least one valve is a three-ports-two-positions valve for alternately connecting the pump line with the nozzle line and the fluid supplier line respectively. Thus, fluidically disconnecting the nozzle line from the pump line results in the simultaneous fluidic connection between the pump line and the fluid supplier line and vice versa.

Depending on the speed of control of the valve, i.e. depending on the speed of switching of the valve, to change fluidic connection or to re-establish fluidic connection between the pump line and the nozzle line, there is a risk that fluid displacement still occurs at this time, the risk being higher the slower the speed of switching is. According to an embodiment, the pipetting system further comprises a two ports two positions valve for preventing or allowing flow in the fluid supplier line. This valve is thus as an on/off valve dividing the fluid supplier line in two segments. The controller is in this embodiment further configured to control the two ports two positions valve such that fluid flow in the fluid supplier line is prevented before fluidically connecting the nozzle line and the pump line in the sample dispensing position, and such that fluid flow in the fluid supplier line is allowed when fluidically disconnecting the nozzle line from the pump line and fluidically connecting the pump line to the fluid supplier line. With the use of a second valve the risk of fluid displacement at the time of switching of the first valve is minimized.

Instead of using a three-ports-two-positions valve and a two-ports-two-positions valve, the pipetting system may comprise at least two two-ports-two-positions valves. In particular, according to an embodiment the pump line is fluidically connectable to the nozzle line via a nozzle-sided two-ports-two-positions valve and is fluidically connectable to the fluid supplier line via a fluid-supplier-sided two-ports-two-positions valve.

According to an alternative embodiment, the pipetting system comprises a fluid supplier height adjuster and the controller, instead of or in addition to controlling the at least one valve such that the nozzle line is fluidically disconnected from the pump line, is configured to control the fluid supplier height adjuster such that the fluid in the fluid supplier and the aspirated test liquid in the nozzle are hydrostatically balanced, when the aspiration/dispensing nozzle is moved to a dispensing position.

A "fluid supplier height adjuster" is a device which dynamically adjusts the height of the fluid supplier as the level of fluid in the fluid supplier changes and/or as the nozzle moves in the z-direction between an aspiration and a dispensing position, in order to minimize hydrostatic pressure differences between the fluid supplier and the nozzle, and possibly balance the hydrostatic pressure. The fluid supplier height adjuster may comprise or cooperate with a fluid level sensor to detect level of fluid in the fluid supplier. Alternatively the residual level of fluid may be calculated knowing the consumption after each use. The fluid level sensor may be an optical sensor, a capacitive sensor, a gravimetric sensor or the like. The fluid supplier height adjuster may further comprise a drive device comprising an electric motor controlled by the controller in order to adjust the height of the fluid supplier based on the information of the fluid level and/or on the position of the aspiration/dispensing nozzle. According to a simplified embodiment, the fluid supplier height adjuster comprises a passive resilient device, such as a spring, on which the fluid supplier can rest or be attached to, which keeps the fluid supplier in the range of movement of the aspiration/dispensing nozzle in the z-direction and which adapts the height of the fluid supplier as the level of fluid in the fluid supplier decreases, such as to maintain the fluid level constant. In this case, although some hydrostatic pressure difference may be present and some fluid displacement within the nozzle may occur, this could be negligible.

A method of pipetting a test liquid with the above pipetting system is also described.

The method comprises moving the aspiration/dispensing nozzle to an aspiration position and aspirating a pre-defined volume of test liquid while the nozzle line is fluidically connected to the pump line and fluidically disconnected from the fluid supplier line. The method further comprises moving the aspiration/dispensing nozzle to a dispensing position while the nozzle line is fluidically disconnected from the pump line. The method further comprises fluidically connecting the nozzle line and the pump line in the sample dispensing position and dispensing at least a part of the aspirated test liquid.

According to an embodiment the method further comprises moving the aspiration/dispensing nozzle to an end position. The method further comprises fluidically disconnecting the nozzle line from the pump line and fluidically connecting the pump line to the fluid supplier line, and aspirating fluid from the fluid supplier line into the pump line. The method further comprises fluidically disconnecting the fluid supplier line from the pump line and fluidically connecting the nozzle line to the pump line, and dispensing at least part of the fluid through the nozzle in the end position.

According to an embodiment, the method comprises moving the aspiration/dispensing nozzle to the sample dispensing position comprises having the pump line fluidically connected to the fluid supplier line, e.g. by simultaneously fluidically disconnecting the nozzle line from the pump line and fluidically connecting the pump line to the fluid supplier line, e.g. by a three-ports-two-positions valve.

According to an embodiment, fluidically connecting the nozzle line and the pump line in the sample dispensing position comprises first preventing fluid flow in the fluid supplier line, e.g. by an on/off valve in the fluid supplier line.

According to an embodiment, fluidically disconnecting the nozzle line from the pump line and fluidically connecting the pump line to the fluid supplier line comprises allowing fluid flow in the fluid supplier line, e.g. by an on/off valve in the fluid supplier line.

The method may comprise repeating any of the above steps of pipetting including moving the aspiration/dispensing nozzle from an end position to an aspiration position, from the aspiration position to a dispending position and from the dispensing position back to same or different end position before eventually starting over again.

According to an embodiment, instead of or in addition to having the nozzle line fluidically disconnected from the pump line and from the fluid supplier line when moving the aspiration/dispensing nozzle to the sample dispensing position, the method comprises adjusting the height of the fluid supplier so that the fluid in the fluid supplier is hydrostatically balanced with the test liquid in the aspiration/dispensing nozzle or the fluid level in the fluid supplier is maintained constant at a height, which is in a range of movement of the aspiration/dispensing nozzle in the vertical direction.

Other and further objects, features and advantages will appear from the following description of exemplary embodiments and accompanying drawings, which serve to explain the principles more in detail.

### Brief description of the drawings

FIG. 1 shows schematically an embodiment of a pipetting system for pipetting a test liquid.
FIG. 2 shows schematically another embodiment of a pipetting system for pipetting a test liquid.
FIG. 3 shows schematically another embodiment of a pipetting system for pipetting a test liquid
FIG. 4 shows schematically another embodiment of a pipetting system for pipetting a test liquid

### Detailed Description

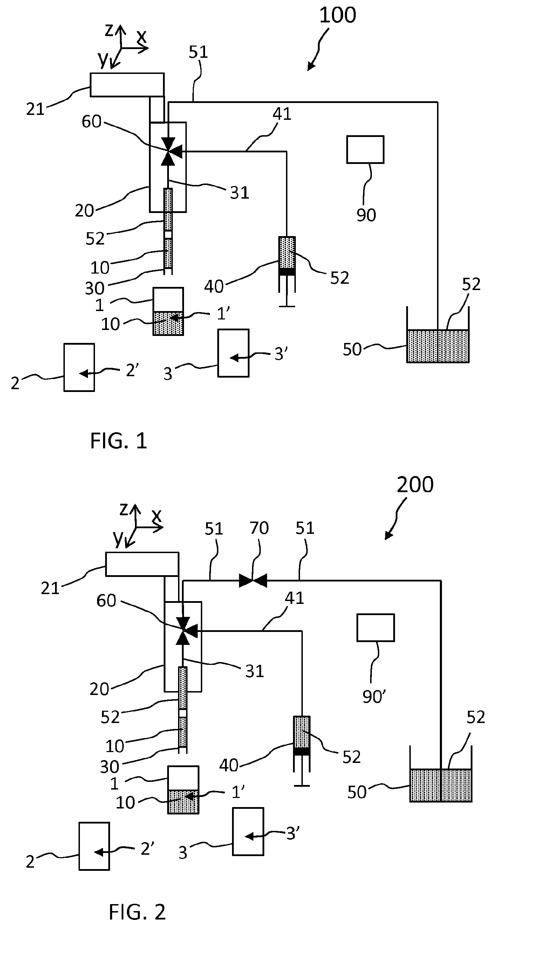

FIG. 1 shows schematically a pipetting system 100 for pipetting a test liquid 10. The system comprises a pipetting head 20 mounted on a x-y-z Cartesian head translation mechanism 21. The head translation mechanism may however be configured to be translatable in only two dimensions, e.g. x-z or y-z. The system 100 further comprises an aspiration/dispensing nozzle 30 attached to the pipetting head 20 and a nozzle line 31, a pump 40 and a pump line 41, a fluid supplier 50 comprising a wash fluid 52 and a fluid supplier line 51, and a valve 60 mounted on the pipetting head 20 and connected to the nozzle line 31, the pump line 41 and the fluid supplier line 51. The valve 60 is a three-ports-two-positions valve for alternately connecting the pump line 41 with the nozzle line 31 and the fluid supplier line 51 respectively. The pump 40 is a syringe pump. The pipetting system 100 uses in this example the same wash fluid 52 as system fluid in the pump line 41 and nozzle line 31 for hydraulic pumping by the pump 40. The system 100 further comprises or is configured to receive at least one test fluid container 1, at least one reaction vessel 2 and at least one wash station 3. The system 100 further comprises a controller 90 configured to control the valve 60 such that when the aspiration/dispensing nozzle 30 is in an aspiration position 1' in a test fluid container 1 to aspirate a volume of test liquid 10, the nozzle line 31 is fluidically connected to the pump line 41 and fluidically disconnected from the fluid supplier line 51. The controller 90 is further configured to control the valve 60 such that when moving the aspiration/dispensing nozzle 30 to a dispensing position 2' in a reaction vessel 2, the nozzle line 31 is fluidically disconnected from the pump line 41 and the pump line 41 is fluidically connected to the fluid supplier line 51. Then, before an aspirated volume of test liquid 10 is dispensed in the dispensing position 2', the nozzle line 31 is fluidically reconnected to the pump line 41. The controller 90 is further configured to control the valve 60 such that before a volume of fluid 52 is aspirated from the fluid supplier line 51 into the pump line 41, the nozzle line 31 is fluidically disconnected from the pump line 41 and the pump line 41 is fluidically connected to the fluid supplier line 51, and before a volume of fluid 52 is dispensed through the nozzle in an end position 3' of a waste compartment 3, the fluid supplier line 51 is fluidically disconnected from the pump line 41 and the nozzle line 31 is fluidically connected to the pump line 41.

Fig. 2 shows schematically a pipetting system 200, which is a variant of the pipetting system 100 of Fig. 1. In particular, compared to the system 100 of Fig. 1, the system 200 further comprises a two-ports-two-positions valve 70 for preventing or allowing flow in the fluid supplier line 51, and a controller 90', which compared to the controller 90 of Fig. 1 is further configured to control the two-ports-two-positions valve 70 such that fluid flow in the fluid supplier line 51 is prevented before fluidically connecting the nozzle line 31 and the pump line 51 in the sample dispensing position 2', and such that fluid flow in the fluid supplier line 51 is allowed when fluidically disconnecting the nozzle line 31 from the pump line 41 and fluidically connecting the pump line 41 to the fluid supplier line 51.

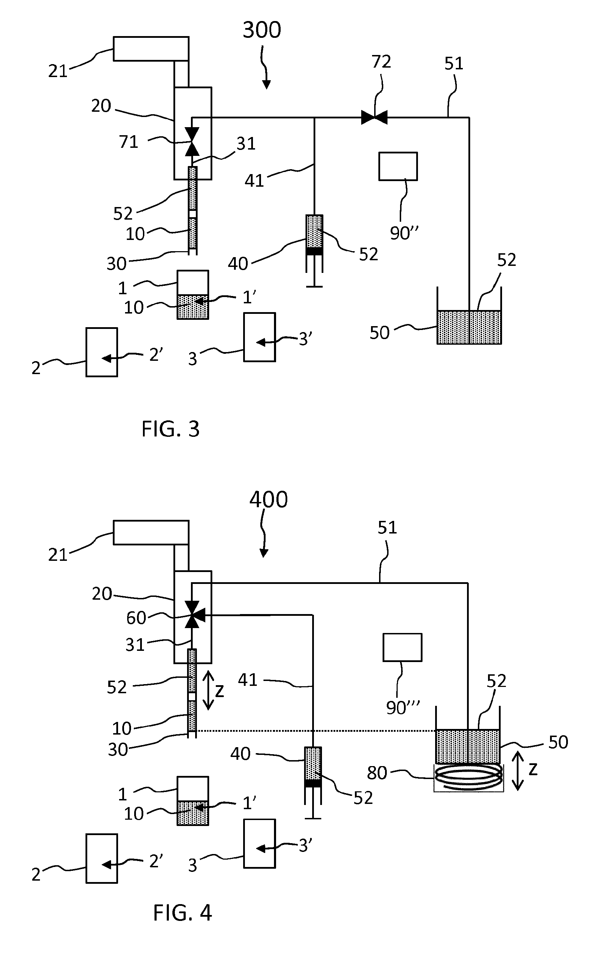

Fig. 3 shows schematically a pipetting system 300, which is a variant of the pipetting system 200 of Fig.2. In particular, instead of using a three-ports-two-positions valve 60 and a two-ports-two-positions valve 70, the pipetting system 300 comprises two two-ports-two-positions valves 71, 72. In particular, the pump line 41 is fluidically connectable to the nozzle line 31 via a nozzle-sided two-ports-two-positions valve 71 and is fluidically connectable to the fluid supplier line 51 via a fluid-supplier-sided two-ports-two-positions valve 72. The nozzle-sided two-ports-two-positions valve 71 is mounted on the pipetting head 20. The fluid-supplier-sided two-ports-two-positions valve 72 is shown out of the pipetting head 20 but could be also mounted on the pipetting head. The system 300 further comprises a controller 90" which is a variant of the controller 90' of Fig. 2. In particular, the controller 90" is configured to control the two valves 71, 72 such that when the aspiration/dispensing nozzle 30 is in an aspiration position 1' in a test fluid container 1 to aspirate a pre-defined volume of test liquid 10, the nozzle line 31 is fluidically connected to the pump line 41 and the pump line 41 is fluidically disconnected from the fluid supplier line 51. The controller 90" is further configured to control the valve 71 such that when moving the aspiration/dispensing nozzle 30 to a dispensing position 2' in a reaction vessel 2, the nozzle line 31 is fluidically disconnected from the pump line 41, and before an aspirated volume of test liquid 10 is dispensed in the dispensing position 2', the nozzle line 31 is fluidically connected to the pump line 41. The controller 90" is further configured to control the valve 72 such that when moving the aspiration/dispensing nozzle 30 to a dispensing position 2' the pump line 41 is fluidically connected to the fluid supplier line 51. The controller 90" is further configured to control the valves 71, 72 such that before a volume of fluid 52 is aspirated from the fluid supplier line 51 into the pump line 41, the nozzle line 31 is fluidically disconnected from the pump line 41 and the pump line 41 is fluidically connected to the fluid supplier line 51, and before a volume of fluid 52 is dispensed through the nozzle in an end position 3' of a waste compartment 3, the fluid supplier line 51 is fluidically disconnected from the pump line 41 and the nozzle line 31 is fluidically connected to the pump line 41.

FIG. 4 shows schematically another embodiment of a pipetting system 400 for pipetting a test liquid 10. The difference with for example the pipetting system 100 of Fig. 1 is that the pipetting system 400 comprises a fluid supplier height adjuster 80, which dynamically adjusts the height of the fluid supplier 50 as the level of fluid 52 in the fluid supplier 50 changes and as the nozzle moves in the z-direction between an aspiration position 1' and a dispensing position 2', in order to minimize hydrostatic pressure differences between the fluid supplier 50 and the nozzle 30, and to balance the hydrostatic pressure. The system 400 further comprises a controller 90"', which in addition to controlling the valve 60 is also configured to control the fluid supplier height adjuster 80 such that the fluid 52 in the fluid supplier 50 and the aspirated test liquid 10 in the nozzle 30 are hydrostatically balanced, when the aspiration/dispensing nozzle 30 is moved to a dispensing position 2'.

With reference to Figures 1 to 3, a method of pipetting a test liquid 10 comprises moving the aspiration/dispensing nozzle 30 to an aspiration position 1' and aspirating a pre-defined volume of test liquid 10 while the nozzle line 31 is fluidically connected to the pump line 41 and fluidically disconnected from the fluid supplier line 51. The method further comprises moving the aspiration/dispensing nozzle 30 to a dispensing position 2' while the nozzle line 31 is fluidically disconnected from the pump line 41. The method further comprises fluidically connecting the nozzle line 31 and the pump line 41 in the sample dispensing position 2' and dispensing at least a part of the aspirated test liquid 10. The method further comprises moving the aspiration/dispensing nozzle 30 to an end position 3'. The method further comprises fluidically disconnecting the nozzle line 31 from the pump line 41 and fluidically connecting the pump line 41 to the fluid supplier line 51, and aspirating fluid 52 from the fluid supplier line 51 into the pump line 41. The method further comprises fluidically disconnecting the fluid supplier line 51 from the pump line 41 and fluidically connecting the nozzle line 31 to the pump line 41, and dispensing at least part of the fluid 52 through the nozzle in the end position 3'.

According to certain embodiments, as in Fig. 1 and Fig. 2, the method comprises simultaneously fluidically disconnecting the nozzle line 31 from the pump line 41 and fluidically connecting the pump line 41 to the fluid supplier line 51 before moving the aspiration/dispensing nozzle 30 from the aspiration position 1' to the sample dispensing position 2'.

According to certain embodiments, as in Fig. 2 and Fig. 3, fluidically connecting the nozzle line 31 and the pump line 41 in the sample dispensing position 2' comprises first preventing fluid flow in the fluid supplier line 51. Also, fluidically disconnecting the nozzle line 31 from the pump line 41 and fluidically connecting the pump line 41 to the fluid supplier line 51 comprises allowing fluid flow in the fluid supplier line 51.

The method may comprise repeating any of the above steps of pipetting including moving the aspiration/dispensing nozzle 30 from an end position 3' to an aspiration position 1', from the aspiration position 1' to a dispending position 2' and from the dispensing position back to the same or different end position 3'.

The method may comprise multiple dispensing of smaller amounts of a larger aspirated volume of test liquid 10. This may include moving the aspiration/dispensing nozzle 30 to different dispensing positions 2' and repeating a dispensing operation at each dispensing position 2', before moving to an end position 3'. Moving the aspiration/dispensing nozzle 30 from a dispensing position 2' to a different dispensing position 2' can include having the nozzle line 31 fluidically disconnected from the pump line 41 during the movement, and fluidically connecting the nozzle line 31 and the pump line 41 in the next sample dispensing position 2'.

According to an embodiment, as in Fig. 4, when moving the aspiration/dispensing nozzle 30 to the sample dispensing position 2', the method comprises adjusting the height of the fluid supplier 50 so that the fluid 52 in the fluid supplier 50 is hydrostatically balanced with the test liquid 10 in the aspiration/dispensing nozzle 30.

Obviously modifications and variations of the disclosed embodiments are possible in light of the above description. It is therefore to be understood, that within the scope of the appended claims, the invention may be practiced otherwise than as specifically devised in the above examples.

## Claims

1. Method of pipetting a test liquid (10), the method comprising
- controlling a pipetting system (100, 200, 300, 400) comprising an aspiration/dispensing nozzle (30), a pump (40) and a fluid supplier (50), at least part of which are fluidically connectable to each other via a nozzle line (31), a pump line (41) and a fluid supplier line (51) respectively, and via at least one valve (60, 70, 71, 72), wherein controlling the pipetting system (100, 200, 300, 400) comprises
- moving the aspiration/dispensing nozzle (30) to an aspiration position (1') and aspirating a volume of test liquid (10) while the nozzle line (31) is fluidically connected to the pump line (41) and fluidically disconnected from the fluid supplier line (51),
- moving the aspiration/dispensing nozzle (30) to a dispensing position (2') while the nozzle line (31) is fluidically disconnected from the pump line (41),
- fluidically connecting the nozzle line (31) and the pump line (41) in the sample dispensing position (2') and dispensing at least a part of the aspirated test liquid (10).

2. Method according to claim 1, the method further comprising
- moving the aspiration/dispensing nozzle (30) to an end position (3'),
- fluidically disconnecting the nozzle line (31) from the pump line (41) and fluidically connecting the pump line (41) to the fluid supplier line (51), and aspirating fluid (52) from the fluid supplier line (51) into the pump line (41),
- fluidically disconnecting the fluid supplier line (51) from the pump line (41) and fluidically connecting the nozzle line (31) to the pump line (41), and dispensing at least part of the fluid (52) through the nozzle (30) in the end position (3').

3. Method according to claim 1 or 2 wherein moving the aspiration/dispensing nozzle (30) to the sample dispensing position (2') comprises having the pump line (41) fluidically connected to the fluid supplier line (51).

4. Method according to claim 3 wherein fluidically connecting the nozzle line (31) and the pump line (41) in the sample dispensing position (2') comprises first preventing fluid flow in the fluid supplier line (51).

5. Method according to claim 4 wherein fluidically disconnecting the nozzle line (31) from the pump line (41) and fluidically connecting the pump line (41) to the fluid supplier line (51) comprises allowing fluid flow in the fluid supplier line (51).

6. Method according to claim 1 wherein instead of or in addition to having the nozzle line (31) fluidically disconnected from the pump line (41) and from the fluid supplier line (51) when moving the aspiration/dispensing nozzle (30) to the sample dispensing position (2'), the method comprises adjusting the height of the fluid supplier (50) so that the fluid (52) in the fluid supplier (50) is hydrostatically balanced with the test liquid (10) in the aspiration/dispensing nozzle (30) or the fluid level in the fluid supplier (50) is maintained constant at a height, which is in a range of movement of the aspiration/dispensing nozzle (30) in the vertical direction.

7. Pipetting system (100, 200, 300, 400) for pipetting a test liquid (10), the system (100, 200, 300, 400) comprising a pipetting head (20) mounted on a head translation mechanism (21), the system (100, 200, 300, 400) further comprising an aspiration/dispensing nozzle (30) attached to the pipetting head (20) and a nozzle line (31), a pump (40) and a pump line (41), a fluid supplier (50) comprising a fluid (52) and a fluid supplier line (51), and at least one valve (60, 70, 71, 72) connected to any of the nozzle line (31), the pump line (41) and the fluid supplier line (51), the system (100, 200, 300, 400) further comprising a controller (90, 90', 90", 90"') configured to control the at least one valve (60, 70, 71, 72) such that
- when the aspiration/dispensing nozzle (30) is in an aspiration position (1') to aspirate a pre-defined volume of test liquid (10), the nozzle line (31) is fluidically connected to the pump line (41) and fluidically disconnected from the fluid supplier line (51),
- when moving the aspiration/dispensing nozzle (30) to a dispensing position (2') the nozzle line (31) is fluidically disconnected from the pump line (41),
- before an aspirated volume of test liquid (10) is dispensed in the dispensing position (2'), the nozzle line (31) is fluidically connected to the pump line (41).

8. Pipetting system (100, 200, 300, 400) according to claim 7 wherein the controller is further configured to control the at least one valve such that
- before a volume of fluid is aspirated from the fluid supplier line (51) into the pump line (41), the nozzle line (31) is fluidically disconnected from the pump line (41) and the pump line (41) is fluidically connected to the fluid supplier line (51),
- before a volume of fluid (52) is dispensed through the nozzle (30) in an end position (3'), the fluid supplier line (51) is fluidically disconnected from the pump line (41) and the nozzle line (31) is fluidically connected to the pump line (41).

9. Pipetting system (100, 200, 300, 400) according to claim 7 or 8 wherein the controller (90, 90', 90", 90"') is configured to control the at least one valve (60, 70, 71, 72) such that when moving the aspiration/dispensing nozzle to a dispensing position the nozzle line (31) is fluidically disconnected from the pump line (41) and the pump line (41) is fluidically connected to the fluid supplier line (51).

10. Pipetting system (100, 200, 400) according to any of the claims 7 to 9 wherein the at least one valve (60) is a three-ports-two-positions valve for alternately connecting the pump line (41) with the nozzle line (31) and the fluid supplier line (51) respectively.

11. Pipetting system (200) according to claim 10 wherein the system (200) further comprises a two-ports-two-positions valve (70) for preventing or allowing flow in the fluid supplier line (51), and the controller (90') is further configured to control the two-ports-two-positions valve (70) such that fluid flow in the fluid supplier line (51) is prevented before fluidically connecting the nozzle line (31) and the pump line (41) in the sample dispensing position (2'), and such that fluid flow in the fluid supplier line (51) is allowed when fluidically disconnecting the nozzle line (31) from the pump line (41) and fluidically connecting the pump line (41) to the fluid supplier line (51).

12. Pipetting system (300) according to any of the claims 7 to 9 wherein the pump line (41) is fluidically connectable to the nozzle line (31) via a nozzle-sided two-ports-two-positions valve (71) and is fluidically connectable to the fluid supplier line (51) via a fluid-supplier-sided two-ports-two-positions valve (72).

13. Pipetting system (400) according to any of the claims 7 to 10 wherein the system (400) comprises a fluid supplier height adjuster (80) and wherein the controller (90"'), instead of or in addition to controlling the at least one valve (60) such that the nozzle line (31) is fluidically disconnected from the pump line (41), is configured to control the fluid supplier height adjuster (80) such that the fluid (52) in the fluid supplier (50) and the aspirated test liquid (10) in the nozzle (30) are hydrostatically balanced, or the fluid level in the fluid supplier (50) is maintained constant at a height, which is in a range of movement of the aspiration/dispensing nozzle (30) in the vertical direction (z), when the aspiration/dispensing nozzle (30) is moved to a dispensing position (2').

14. Pipetting system (100, 200, 300, 400) according to any of the claims 7 to 13 wherein the at least one valve (60, 71) is mounted on the pipetting head (20).
